# EUROPÄISCHE PATENTSCHRIFT

(11) **EP 1 432 600 B1**
(45) Veröffentlichungstag und Bekanntmachung des Hinweises auf die Patenterteilung: **22.10.2008**
(21) Anmeldenummer: 02752979.1
(22) Anmeldetag: 25.06.2002
(51) Int. Cl.: B60S 1/08, G01N 21/45

(54) **HOLOGRAPHISCHER SENSOR, INSBESONDERE ZUR ERKENNUNG VON FEUCHTIGKEIT AUF EINER SCHEIBE EINES KRAFTFAHRZEUGS**
HOLOGRAPHIC SENSOR, ESPECIALLY FOR RECOGNITION OF MOISTURE ON A GLASS PANE OF A MOTOR VEHICLE
CAPTEUR HOLOGRAPHIQUE, NOTAMMENT POUR LA DETECTION D'HUMIDITE SUR UNE VITRE D'UN VEHICULE AUTOMOBILE

(30) Priorität: 26.09.2001 DE 10147447
(43) Veröffentlichungstag der Anmeldung: 30.06.2004
(73) Patentinhaber: ROBERT BOSCH GMBH, 70442 Stuttgart (DE)
(72) Erfinder: SAUTTER, Helmut, 71254 Ditzingen (DE); STAMPFER, Stefan, 77815 Buehl (DE)
(86) Internationale Anmeldenummer: PCT/DE2002/002319
(87) Internationale Veröffentlichungsnummer: WO 2003/026937

(56) Entgegenhaltungen:
- EP-A- 0 736 426
- EP-A- 0 957 017
- EP-A- 0 982 205
- EP-A- 1 195 598
- DE-A- 19 701 258
- DE-A- 19 933 640

## Beschreibung

### Stand der Technik

Die Erfindung betrifft einen holographischen Sensor, insbesondere zur Erkennung von Feuchtigkeit auf einer Scheibe eines Kraftfahrzeugs nach Gattung des unabhängigen Anspruchs.

Es sind schon zahlreiche Sensoren zur Erkennung von Feuchtigkeit auf einer Scheibe eines Kraftfahrzeugs, beispielsweise aus der DE 199 33 640 bekannt, jedoch sind diese Sensoren aufgrund ihrer komplexen lichtleitenden Elemente sehr groß. Da die lichtleitenden Elemente auf der Windschutzscheibe des Kraftfahrzeugs, im vom Wischer überstrichenen Bereich und damit im Sichtbereich des Fahrers angeordnet werden müssen, können die dazugehörigen Gehäuse für den Fahrzeuglenker störend wirken. Dies gilt insbesondere deshalb, da die relativ großen Gehäuse komplexe Befestigungselemente benötigen, die zusätzlich auf der Scheibe aufgebracht sind. Dies ist aufwendig und in der Serienfertigung sehr kostenintensiv.

Aus der EP 0 999 104 A2 ist ein holographischer Sensor zur Erkennung von Wassertropfen auf einer Scheibe bekannt. Hier wird eine Hologrammfolie auf oder in die Windschutzscheibe geklebt.

EP-A-0 982 205 offenbart den Oberbegriff des Anspruchs 1. Vorteile der Erfindung

Der holographische Sensor mit dem Merkmalen des Hauptanspruchs hat den Vorteil, dass das lichtleitende, diffraktive Element auf einer Trägerschicht befestigt ist, welche auf der Windschutzscheibe des Kraftfahrzeugs aufgeklebt wird. Auf diese Weise kann ein kompletter Sensor einschließlich des diffraktiven Elements als kompaktes Bauelemente hergestellt werden, welches in der Serienfertigung von Kraftfahrzeugen nur noch auf die Windschutzscheibe aufgeklebt werden muß. Durch die kompakte Ausbildung des Sensors, insbesondere durch die Integration aller Bauelemente des Sensors innerhalb des Gehäuses, können Toleranzen, beispielsweise zwischen den Strahlungssendern und -empfängern und den optischen Strukturen des diffraktiven Elementes genauer eingehalten werden.

Die Trägerschicht ist mit mindestens einem Befestigungselement verbunden ist, an dem das Gehäuse befestigt ist. Auf diese Weise ist der komplette Sensor auf die Scheibe des Kraftfahrzeug aufklebbar und trotzdem, beispielsweise im Reparaturfall, das Gehäuse von der Trägerschicht mit dem diffraktiven Element abtrennbar. Reparaturen an den optischen oder elektronischen Komponenten können damit ohne Aufwand vorgenommen werden.

Im Gehäuse ist zumindest ein Sender und/oder Empfänger angeordnet, der Strahlung mit mindestens einer Frequenz f abzugeben beziehungsweise zu empfangen vermag und das Befestigungselement zumindest in Teilen im wesentlichen transparent für die Strahlung der mindestens einen Frequenz f ist. Das Befestigungselement ist dann mit seiner ganzen Fläche an der Scheibe ankoppelbar und trägt die Trägerschicht, auf der das diffraktive Element aufgebracht ist. Das Gehäuse ist damit mit einer sehr großen Klebefläche mit der Scheibe des Kraftfahrzeugs verbunden, wodurch sich eine besonders gute Haftung des Sensors auf der Scheibe ergibt und ein Herunterfallen des Sensors, auch bei Extrembedingungen verhindert wird.

Das Befestigungselement ist einstückig mit der Trägerschicht ausgebildet, da so auf eine separate Trägerschicht verzichtet werden kann und die Kosten des Sensors reduziert werden.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn die Trägerschicht direkt auf der Scheibe des Kraftfahrzeugs ankoppelbar, vorzugsweise aufklebbar ist. Dies ist in der Serienfertigung von Kraftfahrzeugen in einfacher Weise am Band zu bewältigen, insbesondere sind hierbei nur geringe Toleranzen erforderlich.

Weiters ist vorteilhaft, wenn im Gehäuse zumindest ein Sender und/oder zumindest ein Empfänger angeordnet sind und das Gehäuse mit der Trägerschicht verbunden ist, so dass sich eine maximale Maßhaltigkeit der einzelnen Komponenten zueinander ergibt. Der Sensor kann so gefertigt und auf einfache Weise zum Fahrzeughersteller transportiert werden, ohne die Maßhaltigkeit und die Qualität des Sensors zu beeinträchtigen.

### Zeichnung

Ausführungsbeispiele der Erfindung sind in den Zeichnungen dargestellt und in der nachfolgenden Beschreibung näher erläutert. Es zeigen:
Figur 1 einen holografischen Sensor nach dem Stand der Technik in schematischer Darstellung,
Figur 2 ein Gehäuseabschnitt eines bekannten holografische Sensors in schematischer Darstellung,
Figur 3 eine Variation eines bekannten Sensors mit Befestigungselementen,
Figur 4 eine weitere Variation des bekannten Sensors und Figur 5 einen erfindungsgemäßen Sensors.

### Beschreibung der Ausführungsbeispiele

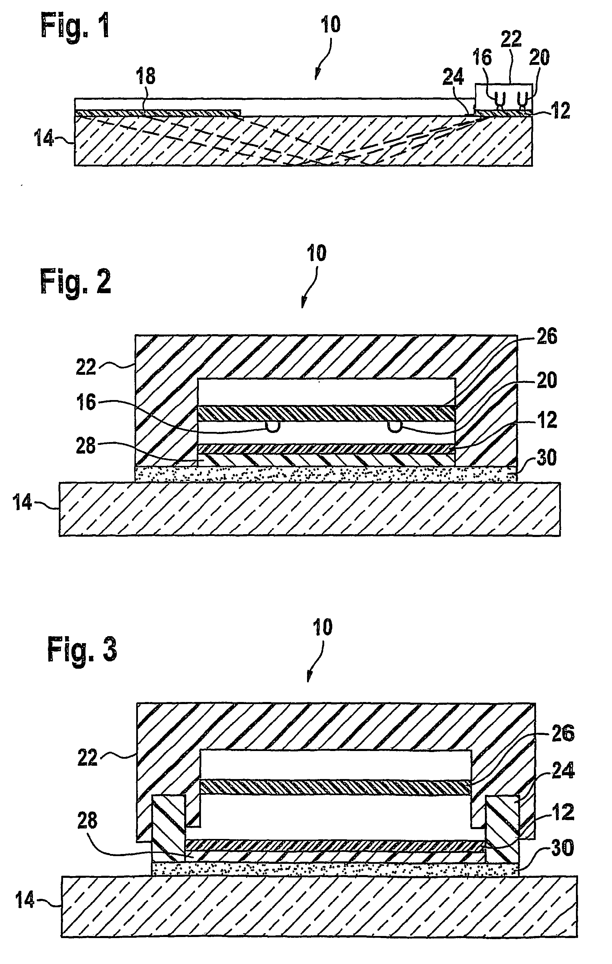

Figur 1 zeigt einen holografischen Sensor in einer schematischen Querschnittsdarstellung. Der Sensor 10 besteht im wesentlichen aus einem ersten diffraktiven Element 12, welches auf einer Scheibe 14 aufgeklebt ist. Das diffraktive Element 12 ist dabei als holografische Folie ausgebildet. Über den diffraktiven Element 12 ist ein Sender 16 angeordnet, der Strahlung mit einer Frequenz f abzugeben vermag. Im Betrieb sendet der Sender 16 Strahlung mit der Frequenz f in Richtung des diffraktiven Elementes 12 aus, welches diese so ablenkt, dass die Strahlung bei trockener Scheibe 14 an der Sensor-abgewandten Glas-Luft-Grenzfläche total reflektiert wird.

Nach dieser Totalreflexion gelangt die Strahlung auf die dem Sensor zugewandte Glas-Luft-Grenzfläche der Scheibe 14 und wird dort über ein weiteres diffraktives Element 18, beispielsweise einem Retroreflektor, und eine weitere Totalreflexion in Richtung des diffraktiven Elementes 12 reflektiert, welches die Strahlung auf einen Empfänger 20 fokussiert.

Das diffraktive Element 12 ist im einzelnen als Folien- oder Dünnschichtelement ausgebildet, welches mittels holographischer Strukturen die Strahlung des Senders 16 in eine Richtung, beispielsweise durch Beugung oder Brechung ablenkt und die Strahlung in bzw. aus der Scheibe 14 ein- oder auszukoppeln vermag.

Sender 16, Empfänger 20 und diffraktives Element 12 sind von einem Gehäuse 22 umschlossen, welches mit Hilfe von Befestigungsmitteln 24 an der Scheibe 14 befestigt ist.

In Figur 2 ist ein Querschnitt durch einen bekannten holografischen Sensor 10 in schematischer Darstellung gezeigt, jedoch wurde das weitere diffraktive Element 18 aus Gründen der Übersichtlichkeit weggelassen. Im Gehäuse 22 ist eine Leiterplatte 26 angeordnet, welche den Sender 16 und den Empfänger 20 trägt. Das Gehäuse 22 ist von im wesentlichen schalenförmiger Gestalt, dessen Innenraum mit der Leiterplatte 26 durch eine Trägerschicht 28 abgeschlossen wird. Auf der dem Innenraum des Gehäuses 22 zugewandten Seite trägt die Trägerschicht 28 das diffraktive Element 12, so dass das Sensorgehäuse samt dem diffraktiven Element 12 mittels einer Klebeschicht 30 auf die Scheibe 14 geklebt werden kann. Dies ist in der Serienfertigung ein unschätzbarer Vorteil, da das diffraktive Element 12 nicht getrennt von den übrigen Komponenten des Sensors 10 montiert werden muß.

In Figur 3 ist eine Variation des bekannten Sensors aus Figur 2 dargestellt. Die Trägerschicht 28 ist hier fest mit Befestigungsmitteln 24 verbunden, an denen das Gehäuse 22 befestigt, insbesondere angeklipst ist, so dass der elektrische Teil des Gehäuses, der die Leiterplatte 26 beinhaltet, vom optischen Teil, der das diffraktive Element 12 und die Trägerschicht 28 beinhaltet, getrennt werden kann, aber trotzdem als Ganzes auf der Scheibe 14 montierbar ist. Die Trägerschicht 28 und das Befestigungselement 24 sind dabei fest miteinander verbunden und beispielsweise in einem Spritzgußverfahren direkt aneinander angespritzt.

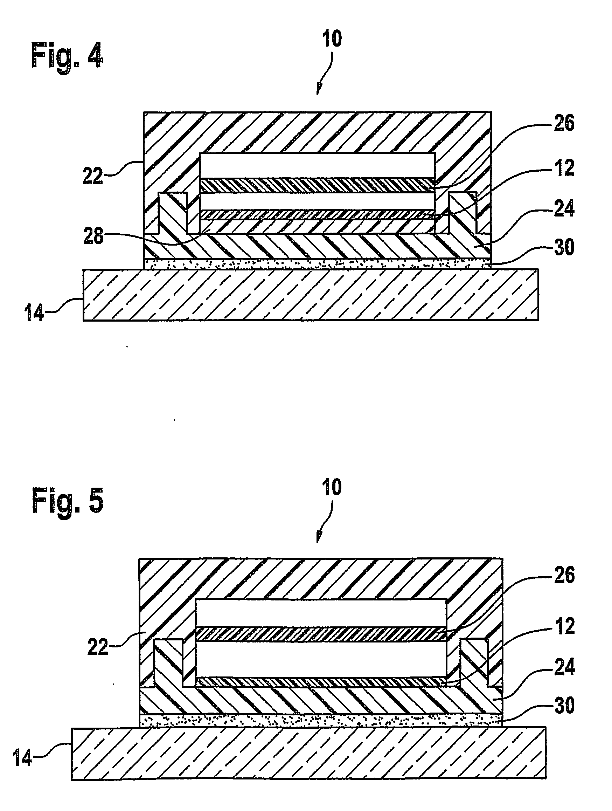

Figur 4 zeigt eine weitere Variation eines bekannten Sensors. Das Befestigungselement 24 erstreckt sich hierbei über den gesamten, vom Gehäuse 22 umschlossenen Sensorbereich. Dazu ist das Befestigungselement 24 natürlich in den Bereichen, in denen die Strahlung vom diffraktiven Element 12 durch die Trägerschicht 28 und durch das Befestigungselement 24 hindurchtreten muß, für die Frequenz f des Senders 16 beziehungsweise des Empfängers 20 transparent. Die Trägerschicht 28 ist auf das Befestigungselement 24 auf der Innenseite des Gehäuses 22 direkt aufgebracht und trägt das diffraktive Element 12. Auf der Seite des Befestigungselementes 24 die mit der Scheibe 14 kontaktiert wird, ist die Klebeschicht 30 aufgebracht.

In Figur 5 ist einen erfindungsgemäßen holografischen Sensors 10 gezeigt. Hier ist das diffraktive Element 12 direkt auf das Befestigungselement 24 mittels eines Klebstoffs oder auch nur durch Adhäsion aufgeklebt, so dass die Trägerschicht 28 und das Befestigungselement 24 einstückig ausgebildet sind.

Als diffraktives Element 12 können übliche Hologramme, die auf optischem oder mechanischem Wege - sogenannte Prägehologramme - hergestellt wurden in Betracht.

Insbesondere können auch mehrere diffraktive Elemente 12, beispielsweise jeweils eines für den Sender 16 und den Empfänger 20, vorgesehen sein.

Die übrigen Komponenten, wie Befestigungsteil 24 oder Gehäuse 22, können aus Kunststoff, insbesondere als Spritzgußteil ausgebildet sein. Prinzipiell kann die Trägerschicht 28 natürlich auch auf die Scheibe 14 angepresst werden und mittels Klemm- oder Federmitteln auf dieser gehalten werden.

## Patentansprüche

1. Holographischer Sensor, insbesondere zur Erkennung von Feuchtigkeit auf einer Scheibe (14) eines Kraftfahrzeugs, mit einem Gehäuse (22) und mindestens einem diffraktiven Element (12), wobei eine Trägerschicht (28) vorgesehen ist, auf der das mindestens eine diffraktive Element (12), befestigt, vorzugsweise aufgeklebt ist, **dadurch gekennzeichnet,**
- **daß** die Trägerschicht (28) mit mindestens einem Befestigungselement (24) verbunden ist, an welchem das Gehäuse (22) befestigt ist
- daß im Gehäuse (22) zumindest ein Sender (16) und/oder Empfänger (20) angeordnet sind, die Strahlung mit mindestens einer Freuqenz f abzugeben beziehungsweise zu empfangen vermögen,
- daß das Befestigungselement (24) zumindest in Teilen im wesentlichen transparent für Strahlung mindestens einer Frequenz f ist,
- daß das Befestigungselement (24) an der Scheibe (14) ankoppelbar ist,
- daß das Befestigungselement (24) die das diffraktive Element (12) tragende Trägerschicht (28) trägt
- daß das Befestigungelement (24) einstückig mit der Trägerschicht (28) ausgebildet ist.

2. Holographischer Sensor nach Anspruch 1, **dadurch gekennzeichnet, daß** die Trägerschicht (28) auf der Scheibe (14) ankoppelbar, vorzugsweise aufklebbar ist.

3. Holographischer Sensor nach einem der vorhergehenden Ansprüche, **dadurch gekennzeichnet, daß** im Gehäuse (22) zumindest ein Sender (16) und/oder mindestens ein Empfänger (20) angeordnet sind und das Gehäuse (22) mit der Trägerschicht (28) zumindest mittelbar verbunden ist.

## Claims

1. Holographic sensor, especially for recognition of moisture on a glass pane (14) of a motor vehicle, having a housing (22) and at least one diffractive element (12), provision being made of a carrier layer (28) to which the at least one diffractive element (12) is fastened, preferably adhesively bonded, **characterized**
- **in that** the carrier layer (28) is connected to at least one fastening element (24) to which the housing (22) is fastened,
- **in that** at least one transmitter (16) and/or receiver (20) which is/are able to emit and/or receive radiation at at least one frequency f is/are arranged in the housing (22),
- **in that** at least parts of the fastening element (24) are essentially transparent to radiation at at least one frequency f,
- **in that** the fastening element (24) can be coupled to the glass pane (14),
- **in that** the fastening element (24) carries the carrier layer (28) which carries the diffractive element (12), and
- **in that** the fastening element (24) is integrally formed with the carrier layer (28).

2. Holographic sensor according to Claim 1, **characterized in that** the carrier layer (28) can be coupled to the glass pane (14), can be preferably adhesively bonded thereto.

3. Holographic sensor according to one of the preceding claims, **characterized in that** at least one transmitter (16) and/or at least one receiver (20) is/are arranged in the housing (22), and the housing (22) is at least indirectly connected to the carrier layer (28).

## Revendications

1. Capteur holographique notamment pour détecter de l'humidité sur une vitre (14) d'un véhicule automobile, comprenant un boîtier (22) et au moins un élément de diffraction (12),
une couche de support (28) étant prévue, sur laquelle est fixé au moins un élément diffraction (12), de préférence par collage,
**caractérisé en ce que**
la couche de support (28) est reliée à au moins un élément de fixation (24) auquel est fixé le boîtier (22),
le boîtier (22) loge au moins un émetteur (16) et/ou un récepteur (20) qui émettent ou reçoivent le rayonnement suivant au moins une fréquence (f),
l'élément de fixation (24) est au moins en partie essentiellement transparent vis-à-vis du rayonnement d'au moins une fréquence (f),
l'élément de fixation (24) est couplé à la vitre (14),
l'élément de fixation (24) porte la couche de support (28) munie de l'élément de diffraction (12), et
l'élément de fixation (24) est réalisé en une seule pièce avec la couche de support (28).

2. Capteur holographique selon la revendication 1,
**caractérisé en ce que**
la couche de support (28) est couplée à la vitre (14), de préférence par collage.

3. Capteur holographique selon l'une des revendications précédentes,
**caractérisé en ce que**
le boîtier (22) loge au moins un capteur (16) et/ou au moins un récepteur (20) et le boîtier (22) est relié au moins indirectement à la couche de support (28).
